# EUROPÄISCHE PATENTSCHRIFT

(11) **EP 1 446 814 B1**
(45) Veröffentlichungstag und Bekanntmachung des Hinweises auf die Patenterteilung: **08.08.2007**
(21) Anmeldenummer: 02803382.7
(22) Anmeldetag: 19.11.2002
(51) Int. Cl.: H01B 1/24, H01R 39/26, H01R 39/20

(54) **HARZGEBUNDENER GRAPHITWERKSTOFF, VERFAHREN ZUR HERSTELLUNG EINES HARZGEBUNDENEN GRAPHITWERKSTOFFES SOWIE VERWENDUNG DIESES**
RESIN BONDED GRAPHITE MATERIAL, METHOD FOR THE PRODUCTION OF A RESIN BONDED GRAPHITE MATERIAL AND USE THEREOF
MATERIAU GRAPHITE A LIANT EN RESINE, PROCEDE DE PRODUCTION D'UN MATERIAU GRAPHITE A LIANT EN RESINE ET UTILISATION DE CE MATERIAU

(30) Priorität: 19.11.2001 DE 10156320
(43) Veröffentlichungstag der Anmeldung: 18.08.2004
(73) Patentinhaber: Schunk Kohlenstofftechnik GmbH, D-35452 Heuchelheim (DE)
(72) Erfinder: HÜBNER, Bettina, 35519 Rockenberg (DE); SPERLING, Rainer, 35444 Biebertal (DE); TONTSCH, Klaus-Georg, 35398 Giessen (DE)
(74) Vertreter: Stoffregen, Hans-Herbert
(86) Internationale Anmeldenummer: PCT/EP2002/012953
(87) Internationale Veröffentlichungsnummer: WO 2003/044808

(56) Entgegenhaltungen:
- EP-A- 1 074 997
- DE-A- 2 101 982
- DE-A- 3 935 140
- DE-A- 19 754 411
- DE-U- 29 905 433
- US-A- 4 094 897
- US-A- 4 351 745
- US-A- 5 078 936

## Beschreibung

Die Erfindung bezieht sich auf einen harzgebundenen Graphitwerkstoff, insbesondere bestimmt für einen elektrischen Kontakt, mit einem spezifischen elektrischen Widerstand mit W_{spez} ≥ 3500 µΩm. Ferner nimmt die Erfindung Bezug auf ein Verfahren zur Herstellung eines harzgebundenen Graphitwerkstoffes, insbesondere als elektrisches Kontaktmaterial. Schließlich bezieht sich die Erfindung auf die Verwendung eines harzgebundenen Graphitwerkstoffes.

Für Kohlebürsten, insbesondere Kleinkohlebürsten, werden harzgebundene Graphitwerkstoffe, Kohlenstoff-Graphitwerkstoffe, Elektrographit oder Graphit mit Metallzusätzen wie Kupfer und Silber verwendet, um nur einige Beispiele zu nennen- Insbesondere die Kohlenstoff-Graphilwerkstoffe werden bei Universalmotoren für Haushaltsgeräte eingesetzt, da diese sich durch vielseitige Verwendbarkeit für spezielle Problemlösungen auszeichnen. Hierzu gehören gutes Kommutieren, geringe Funkstörung, hohe Lebensdauer und Einsatzmöglichkeit bei hoher mechanischer und elektrischer Belastung. Durch die Verwendung von möglichst hochohmigem Kohlenbürstenmaterial können dabei Kurzschlussströme begrenzt und der Innenwiderstand von Störquellen erhöht werden. Entsprechende Kohlenstoff-Graphitwerkstoffe weisen dabei einen spezifischen elektrischen Widerstand bis zu 2.400 µΩm auf (s. Datenblatt "Schunk Kohlenstofftechnik GmbH, Kohlenbürsten, Werkstoffe physikalische Werte, L-Werkstoffe: Kohlenstoff-Graphit, 13.14/01.99").

Ungeachtet des bisher benutzten hochohmigen Kohlebürstenmaterials ist es zusätzlich-erforderlich, die Kohlebürsten zu imprägnieren, um neben einem verbesserten mechanischen Laufverhalten die Funkstörung während der Kohlebürstenlebensdauer zu senken- Auch werden weiterhin Entstörglieder wie Drosseln oder Spulen integriert.

Die US 4,351,745 bezieht sich auf einen harzgebundenen Graphitwerkstoff, der für' Folien und Filme bestimmt ist, die für elektrische und elektronische Einrichtungen und Maschinen bestimmt sind. Ein entsprechender harzgebundener Graphitwerkstoff besteht aus Graphit und Ruß.

Die US 5,708,936 bezieht sich ebenfalls auf einen elektrisch leitenden Film, der eine Mischung aus Ruß und Graphitpartikel enthält.

Leitfähige, kohlenstoffhaltige Polyarylensulfidmischungen nach der DE 39 35 140 A1 können zu geformten Körpern, Verbundformkörpern, Folien oder Fasern verarbeitet werden, um elektromagnetische Wellen abzuschirmen oder Strom in Wärme umzuwandeln. Ein Einsatz für Leiterbahnen oder -platten für Batterien oder Akkumulatoren ist gleichfalls möglich. Dabei enthält die Mischung Ruß und Graphit.

Die EP 1 074 997 A2 bezieht sich auf eine leitende Harzmischung, die insbesondere für einen Codierschalter benutzt wird. Dabei besteht die Mischung aus Ruß und Kohlenstoff.

Der vorliegenden Erfindung liegt das Problem zu Grunde, einen barzgebundenen Graphitwerkstoff der eingangs genannten Art derart weiterzubilden, dass Funkstörungen bei der Verwendung als elektrischer Kontakt ausgeschlossen oder nahezu ausgeschlossen sind, ohne dass es grundsätzlich weiterer Maßnahmen wie eines Imprägnierens bedarf.

Erfindungsgemäß wird das Problem durch einen harzgebundenen Graphitwerkstoff im Wesentlichen dadurch gelöst, dass der harzgebundene Graphitwerkstoff aus einer Mischung aus rußhaltigem Elektrographit mit einem Rußgehalt R_{G} mit R_{G}≥ 30 Gew.% und rußfreiem Elektrographit sowie Bindemittel besteht und dass der elektrische spezifische Widerstand W_{spez} sich beläuft auf 3500 µΩm ≤ W_{spez} ≤ 15000 µΩm.

Bei dem rußfreien Elektrographit handelt es sich insbesondere um einen rußfreien Elekirographit-Recyclingwerkstoff. Als rußhaltiger Elektrographit kann zum Beispiel Kartuschengraphit eingesetzt werden.

Unabhängig hiervon sollte jedes Ausgangsprodukt ein rußfreier bzw. rußhaltiger Rohstoff sein, der mit Bindemittel gemischt und sodann geglüht, graphitiert und aufgemahlen ist.

Ferner ist vorgesehen, dass der rußhaltige Elektrographit einen spezifischen elektrischen Widerstand W_{spez} mit 3:500 µΩm > W_{spez} ≥ 40 µΩm aufweist. Losgelöst hiervon sollten die Elektrographitausgangssubstanzen isotrop sein, also einen spezifischen elektrischen Widerstand aufweisen, der richtungsunabhängig ist.

Sowohl der rußhaltige Elektrographit als auch der rußfreie Elektrographit sollte eine Korngröße d₅₀ mit 20 µm ≤ d₅₀ ≤ 40 µm aufweisen. Die Kennzahl d₅₀ bedeutet dabei, dass 50% des aufgemahlenen Rohstoffes durch ein Sieb der angegebenen Maschenweite fällt.

Als Bindemittel wird insbesondere ein synthetisches Pulverharz wie synthetischer Kunststoff, insbesondere Duroplast eingesetzt. Vorzugsweise handelt es sich bei dem Bindemittel um ein in Lösungsmittel gelöstes Pulverharz bzw. ein lösungsmittelfreies Flüssigharz.

Ferner sollte das Bindemittel in Form eines Flüssigharzes und/oder eines in Lösungsmittel gelösten Pulverharzes eine Glasumwandlungstemperatur T_{G} mit 50° ≤ T_{G} ≤ 250 °C aufweisen. Als weitere charakteristische Größe dieser Harze ist deren Viskosität V bei Zimmertemperatur mit 10 cP ≤ V ≤ 6000 cP zu nennen.

Die Mischung selbst sollte 15 - 75 Gewichtsanteile des rußhaltigen Elektrographits, 15 - 75 Gewichtsanteile des rußfreien Elektrographits, 0 - 10 Gewichtsanteile Festschmierstoffe, 0 - 1 Gewichtsanteil abrasiven Zusatzstoff aufweisen, wobei den Feststoffen 15 - 35 Gewichtsanteile Bindemittel beigefügt ist.

Anzumerken ist, dass bei den angegebenen Gewichtsanteilen die Rohstoffe, d. h. rußfreier und rußhaltiger Elektrographit sowie die gegebenenfalls vorhandenen Zusatzstoffe insgesamt 100 Gewichtsanteile ausmachen, zu denen sodann das Bindemittel mit einem Gewichtsanteil von 15-35 hinzukommt, bezogen auf die 100 Gewichtsanteile an Rohstoffen.

Aufgrund der erfindungsgemäßen Mischung aus rußhaltigem Elektrographit, rußfreiem feinkörnigen Elektrographit wie insbesondere Elektrographit-Recyclingwerkstoff sowie flüssigem Bindemittel ergibt sich ein harzgebundener Graphitwerkstoff mit einem spezifischen elektrischen Widerstand W_{spez} > 3.500 µΩm, insbesondere bis zu 10.000 µΩm oder mehr. Somit kann fast von einem Isolator gesprochen werden, ohne dass jedoch die elektrische Leiteigenschaft negativ beeinflusst wird. Hierdurch ergeben sich insbesondere Vorteile in Bezug auf das Funkstörverhalten, so dass teure Entstörglieder wie Drosseln oder Spulen nicht verwendet werden müssen. Auch ist es nicht erforderlich, den Werkstoff zu imprägnieren, wie dies nach zumindest dem Stand der Technik notwendig ist. Dieser Werkstoff wird bei kleiner Leistung (< 400 Watt) und vorzugsweise 220 - 250 V Spannung eingesetzt, um die elektrischen Ströme klein zu halten. Bei Betrieb in diesem Leistungsbereich treten keine höheren Temperaturen an der Kohlebürste auf als bei herkömmlichen Werkstoffen. Ebenso sind Lebensdauer und Verschleiß der Kohlebürste mit üblichen Werkstoffen vergleichbar.

Ein Verfahren zur Herstellung eines harzgebundenen Graphitwerkstoffes, insbesondere zur Verwendung als elektrisches Kontaktmaterial, ist im Wesentlichen durch die Verfahrensschritte gekennzeichnet:
- Mischen von rußhaltigem Elektrographit mit einem Rußgehalt R_{G} mit R_{G} > 30 Gew.%, rußfreiem feinkörnigen Elektrographit mit einem spezifischen elektrischen Widerstand W_{spez} mit 8 Ωm ≤ W_{spez} ≤ 30 µΩm und einem flüssigen Bindemittel bei einer Temperatur T₁,
- Aufmahlen der Mischung,
- Verpressen aufgemahlter Mischung zu einem Pressling und
- anschließendes Aushärten.

Insbesondere werden der rußhaltige Elektrographit, der rußfreie feinkörnige Elektrographit und das flüssige Bindemittel wie Flüssigharz bei Raumtemperatur gemischt. Die so hergestellte Mischung wird sodann zu einer Korngröße d₅₀ mit 50 µm ≤ d₅₀ ≤ 150 µm aufgemahlen. Anschließend wird die aufgemahlene Mischung einem spezifischen Pressdruck zwischen 1.000 und 2.000 kp/cm² ausgesetzt. Der Pressling kann sodann über einen Zeitraum t mit 10 Stunden ≤ t ≤ 20 Stunden bei einer Endtemperatur T mit 180 °C ≤ T ≤ 250 °C ausgehärtet werden.

Ein hoher spezifischer elektrischer Widerstand des erfindungsgemäßen harzgebundenen Graphitwerkstoffes ergibt sich dann, wenn 15 - 75 Gewichtsanteile an rußhaltigem Elektrographit, 15 - 75 Gewichtsanteile an rußfreiem feinkörnigen Elektrographit und 15 - 35 Gewichtsanteile an Bindemittel gemischt werden, wobei der Mischung vorzugsweise 0 - 10 Gewichtsanteile Festschmierstoff und/oder 0 - 1 Gewichtsanteile abrasiver Zusatzstoff beigegeben wird.

Als rußfreier Elektrographit können rußfreier Elektrographit-Recyclingwerkstoff und/oder als rußhaltiger Elektrographit Kartuschengraphit verwendet werden. Als Bindemittel können sowohl in Lösungsmittel gelöstes Pulverharz als auch lösungsmittelfreies Flüssigharz eingesetzt werden, wobei als Bindemittel ein solches auf der Basis eines synthetischen Kunststoffes wie Epoxidharz oder Phenolharz zum Einsatz gelangen sollte. Bei der Verwendung von flüssigem Bindemittel sollte dieses eine Glasumwandlungstemperatur T_{G} mit 50 °C ≤ T_{G} ≤ 250 °C und/oder bei Raumtemperatur eine Viskosität V von 10 cP ≤ V ≤ 6000 cP aufweisen.

Insbesondere zeichnet sich die Erfindung dadurch aus, dass das erfindungsgemäße harzgebundene Graphitmaterial als Material für eine Kohlebürste oder einen Schleifring verwendet wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nach zumindest folgenden Beschreibung von Beispielen.

### Beispiel 1:

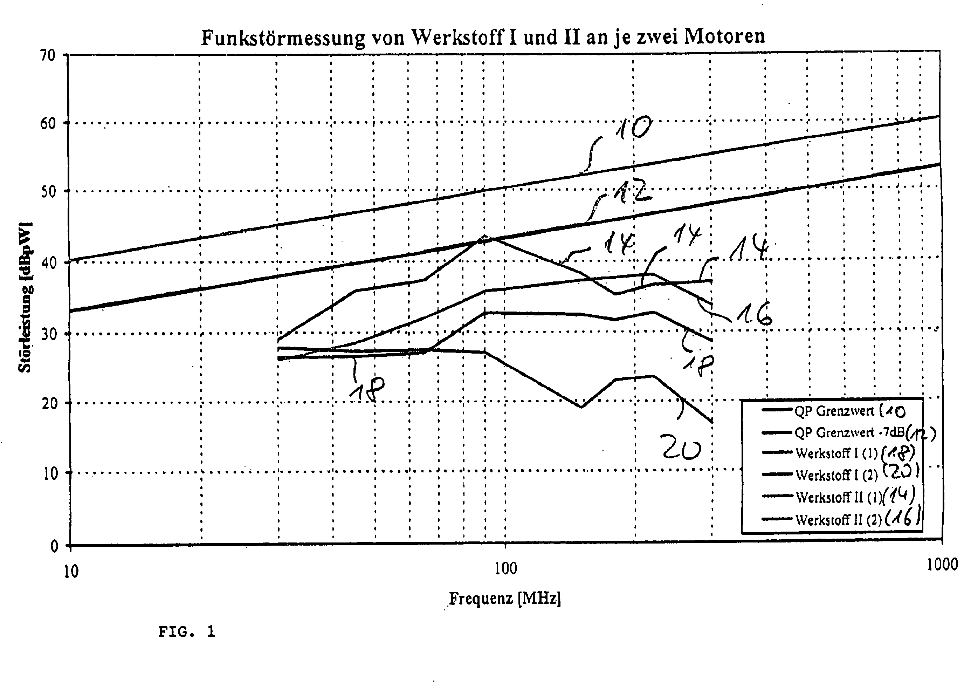

Zur Herstellung einer Kohlebürste bestimmt für Elektrokleinmotoren wurden 50 Gewichtsanteile rußhaltigen Elektrographits mit einem Rußgehalt von 50 Gew.%, einem spezifischen elektrischen Widerstand W_{spez} von in etwa 100 µΩm und einer Korngröße d₅₀ von 30 µm mit 50 Gewichtsanteilen rußfreiem feinkörnigen Elektrographit-Recyclingwerkstoff mit einem spezifischen elektrischen Widerstand W_{spez} von 20 µΩm und einer Korngröße d₅₀ von 30 µm mit 25 Gewichtsanteilen eines lösungsmittelgelösten Pulverharzes in Form eines Epoxidharzes in einem Sigmakneter bei Raumtemperatur gemischt. Die fertige Mischung wurde sodann auf eine Korngröße d₅₀ = 90 µm aufgemahlen und mit einem spezifischen Pressdruck von 1500 kp/cm² verpresst. Der Pressling wurde anschließend einem 15-stündigen Aushärtezyklus mit einer Endtemperatur von 200 °C unterworfen. Entsprechende Presslinge wiesen einen spezifischen elektrischen Widerstand W_{spez} von 8000 µΩm auf. Aus entsprechenden Presslingen hergestellte Kohlebürsten wurden sodann zu Vergleichsmessungen mit Kohlebürsten aus herkömmlichem harzgebundenem Kohlenstoff-Graphitwerkstoff mit einem spezifischen elektrischen Widerstand W_{spez} von 600 µΩm verglichen. Dabei wurden Funkstörmessungen an zwei Elektromotoren durchgeführt. Die Ergebnisse sind der Fig. 1 zu entnehmen.

Der in der einzigen Figur mit dem Bezugszeichen 10 gekennzeichnete Graph entspricht dein Grenzwert des Funkstörpegels, wohingegen die Gerade mit dem Bezugszeichen 12 der um 7 dB reduzierte Grenzwert ist.

Die Kurven 14, 16 werden an zwei Motoren, die mit den Kohlebürsten aus herkömmlichem Kohlebürstemverkstoff bestückt waren, gemessen. Die Meßkurven 18, 20 sind die Ergebnisse der gleichen Motoren, jedoch bestückt mit den aus dem erfindungsgemäßen Werkstoff hergestellten Kohlenbürsten, die einen spezifischen elektrischen Widerstand von 8000 µΩm aufwiesen. Eine deutliche Reduzierung der Funkstörung mit dem erfindungsgemäßen Werkstoff ist erkennbar.

### Beispiel 2:

Zur Herstellung einer Kohlebürste bestimmt für Elektrokleinmotoren wurden 40 Gewichtsanteile rußhaltigen Elektrographits mit einem Rußgehalt von 50 Gew.%, einem spezifischen elektrischen Widerstand W_{spez} von in etwa 100 µΩm und einer Korngröße d₅₀ von 30 µm mit 60 Gewichtsanteilen rußfreiem feinkörnigen Elektrographit-Recyclingwerkstoff mit einem spezifischen elektrischen Widerstand W_{spez} von 20 µΩm und einer Korngröße d₅₀ von 30 µm mit 25 Gewichtsanteilen eines lösungsmittelgelösten Pulverharzes in Form eines Epoxidharzes in einem Sigmakneter bei Raumtemperatur gemischt. Die fertige Mischung wurde sodann auf eine Korngröße d₅₀ = 90 µm aufgemahlen und mit einem spezifischen Pressdruck von 1500 kp/cm² verpresst. Der Pressling wurde anschließend einem 15-stündigen Aushärtezyklus mit einer Endtemperatur von 200 °C untenworfen. Entsprechende Presslinge wiesen einen spezifischen elektrischen Widerstand W_{spez} von 5000 µΩm auf. Aus entsprechenden Presslingen hergestellte Kohlebürsten wurden sodann zu Vergleichsmessungen mit Kohlebürsten aus herkömmlichem hargebundenem Kohlenstoff-Graphitwerkstoff mit einem spezifischen elektrischen Widerstand W_{spez} von 600 µΩm verglichen. Funkstörmessungen haben entsprechend dem Beispiel 1 eine deutliche Reduzierung der Funkstörung im Vergleich zu herkömmlichen Bürsten ergeben.

## Patentansprüche

1. Harzgebundener Graphitwerkstoff, insbesondere bestimmt für einen elektrischen Kontakt, mit einem spezifischen elektrischen Widerstand mit W_{spez} ≥ 3500 µΩm,
**dadurch gekennzeichnet,**
**dass** der harzgebundene Graphitwerkstoff aus einer Mischung aus rußhaltigem Elektrographit mit einem Rußgehalt R_{G} mit R_{G} ≥ 30 Gew.% und rußfreiem Elektrographit sowie Bindemittel besteht und dass der elektrische spezifische Widerstand W_{spez} sich beläuft auf 3500 µΩm ≤ W_{spez} ≤ 15000 µΩm.

2. Harzgebundener Graphitwerkstoff nach zumindest Anspruch 1,
**dadurch gekennzeichnet,**
**dass** der harzgebundene Graphitwerkstoff einen spezifischen elektrischen Widerstand W_{spez} mit W_{spez} ≤ 10000 µΩm aufweist.

3. Harzgebundener Graphitverkstoff nach zumindest Anspruch 1,
**dadurch gekennzeichnet,**
**dass** die Mischung zumindest einen Festschmierstoff als Zuschlagstoff wie MoS₂ und/oder WS₂ und/oder einen abrasiven Zuschlagstoff wie SiC und/oder Al₂O₃ enthält.

4. Harzgebundener Graphitwerkstoff nach zumindest Anspruch 1,
**dadurch gekennzeichnet,**
**dass** der rußfreie Elektrographit aus einem rußfreien Elektrographit-Recyclingwerkstoff besteht.

5. Harzgebundener Graphitwerkstoff nach zumindest Anspruch 1,
**dadurch gekennzeichnet,**
**dass** der rußhaltige Elektrographit aus Kartuschengraphit besteht.

6. Harzgebundener Graphitwerkstoff nach zumindest Anspruch 1,
**dadurch gekennzeichnet,**
**dass** der rußhaltige Elektrographit einen spezifischen elektrischen Widerstand W_{spez} mit 3500 µΩm > W_{spez} ≥ 40 µΩm aufweist.

7. Harzgebundener Graphitwerkstoff nach zumindest Anspruch 1,
**dadurch gekennzeichnet,**
**dass** der rußfreie Elektrographit einen spezifischen elektrischen Widerstand mit 8 µΩm ≤ W_{spez} ≤ 30 µΩm aufweist.

8. Harzgebundener Graphitwerkstoff nach zumindest Anspruch 1,
**dadurch gekennzeichnet,**
**dass** der rußhaltige Elektrographit eine Korngröße d₅₀ mit 20 µm ≤ d₅₀ ≤ 50 µm aufweist.

9. Harzgebundener Graphitwerkstoff nach zumindest Anspruch 1,
**dadurch gekennzeichnet,**
**dass** der rußfreie Elektrographit eine Korngröße d₅₀ mit 20 µm d₅₀ ≤ 50 µm aufweist.

10. Harzgebundener Graphitwerkstoff nach zumindest Anspruch 1,
**dadurch gekennzeichnet,**
**dass** der rußhaltige und/oder der rußfreie Elektrographit in Bezug auf den spezifischen elektrischen Widerstand isotrop ist.

11. Harzgebundener Graphitwerkstoff nach zumindest Anspruch 1.
**dadurch gekennzeichnet,**
**dass** das Bindemittel ein synthetisches Pulverharz wie synthetischer Kunststoff, insbesondere ein Duroplast ist.

12. Harzgebundener Graphitwerkstoff nach zumindest Anspruch 1.
**dadurch gekennzeichnet,**
**dass** das Bindemittel ein synthetisches Epoxidpulverharz und/oder ein Phenolharz ist.

13. Harzgebundener Graphitwerkstoff nach zumindest Anspruch 1,
**dadurch gekennzeichnet,**
**dass** das Bindemittel ein in Lösungsmittel gelöstes Pulverharz und/oder ein lösungsmittelfreies Flüssigharz ist.

14. Harzgebundener Graphitwerkstoff nach zumindest Anspruch 1,
**dadurch gekennzeichnet,**
**dass** der rußhaltige und der rußfreie Elektrographit sowie diesen gegebenenfalls beigegebener Festschmierstoff und/oder abrasiver Zusatzstoff als Rohstoffe insgesamt einen Gewichtsanteil von 100 aufweisen, denen das Bindemittel mit einem Gewichtsanteil von 15 bis 35 bezogen auf die 100 Gewichtsanteilte der Rohstoffe zugegeben ist.

15. Harzgebundener Graphitwerkstoff nach zumindest Anspruch 1,
**dadurch gekennzeichnet,**
**dass** das Bindemittel eine Gbsumwandlungstemperatur T_{G} mit 50°C ≤ T_{G} ≤ 250°C aufweist.

16. Harzgebundener Gruphitwerkstoff nach zumindest Anspruch 1,
**dadurch gekennzeichnet,**
**dass** das Bindemittel eine Viskosität V mit 10 cP ≤ V ≤ 6000 cP bei Zimmertemperatur aufweist.

17. Harzgebundener Graphitwerkstoff nach zumindest Anspruch 1,
**dadurch gekennzeichnet,**
**dass** die Mischung 15 bis 75 Gewichtsanteile des rußhaltigen Elektrographits, 15 bis 75 Gewichtsanteile des rußfreien Elektrographits, 0 bis 10 Gewichtsanteile des Festschmierstoffes, 0 bis 1 Gewichtsanteile des abrasiven Zusatzstoffes sowie 15-35 des Bindemittels enthält.

18. Verfahren zur Herstellung eines harzgebundenen Graphitwerkstoffes, insbesondere bestimmt für ein elektrisches Kontaktmaterial,
**gekennzeichnet durch** die Verfahrensschritte:
- Mischen von rußhaltigem Elektrographit mit einem Rußgehalt R_{G} mit R_{G} > 30 Gew.%, rußfreiem Elektrographit mit einem spezifischen elektrischen Widerstand W_{spez} mit 8 µΩm ≤ W_{spez} ≤ 30 µΩm und Flüssigharz bei einer Temperatur T₁,
- Aufmahlen der Mischung auf eine Korngröße d₅₀ mit 50 µm ≤ d₅₀ ≤ 150 µm,
- Verpressen der aufgemahlenen Mischung und
- Aushärten der aufgemahlenen Mischung zu einem Formkörper.

19. Verfahren nach Anspruch 18,
**dadurch gekennzeichnet**
**dass** der rußhaltige Elektrographit, der rußfreie Elektrographit und das Bindemittel bei der Temperatur T₁ mit T₁ =Raumtemperatur gemischt werden.

20. Verfahren nach zumindest Anspruch 18,
**dadurch gekennzeichnet,**
**dass** der Mischung ein Festschmierstoff wie MoS₂ und/oder WS₂ zugegeben wird.

21. Verfahren nach zumindest Anspruch 18,
**dadurch gekennzeichnet,**
**dass** der Mischung ein abrasiver Zusatzstoff wie SiC und/oder Al₂O₃ zugegeben wird.

22. Verfahren nach zumindest Anspruch 18,
**dadurch gekennzeichnet,**
**dass** die aufgemahlene Mischung bei einem spezifischen Preßdruck zwischen 1000 kP/cm² und 2000kP/ cm² verpresst wird.

23. Verfahren nach zumindest Anspruch 18,
**dadurch gekennzeichnet,**
**dass** der Pressling über einen Zeitraum t bis 10 h ≤ t ≤ 20 h bei einer Endtemperatur T₂ mit 180°C ≤ T₂ ≤ 250°C ausgehärtet wird.

24. Verfahren nach zumindest Anspruch 18,
**dadurch gekennzeichnet,**
**dass** 15 bis 75 Gewichtsanteile des rußhaltigen Elektrographits, 15 bis 75 Gewichtsanteile des rußfreien Elektrographits und 15 bis 35 Gewichtsanteile des Bindemittels gemischt werden.

25. Verfahren nach zumindest Anspruch 18,
**dadurch gekennzeichnet,**
**dass** der Mischung 0 bis 10 Gewichtsanteile des Festschmierstoffes beigegeben wird.

26. Verfahren nach zumindest Anspruch 18,
**dadurch gekennzeichnet,**
**dass** der Mischung 0 bis 1 Gewichtsanteile des abrasiven Zusatzstoffes beigegeben wird.

27. Verfahren nach zumindest Anspruch 18,
**dadurch gekennzeichnet,**
**dass** als rußfreier Elektrographit rußfreier Elektrographit-Recyclingwerkstoff verwendet wird.

28. Verfahren nach zumindest Anspruch 18,
**dadurch gekennzeichnet,**
**dass** als rußhaltiger Elektrographit Kartuschengraphit verwendet wird.

29. Verfahren nach zumindest Anspruch 18,
**dadurch gekennzeichnet,**
**dass** als Bindemittel in Lösungsmittel gelöstes Pulverharz verwendet wird.

30. Verfahren nach zumindest Anspruch 18,
**dadurch gekennzeichnet,**
**dass** als Bindemittel lösungsmittelfreies Flüssigharz verwendet wird.

31. Verfahren nach zumindest Anspruch 18,
**dadurch gekennzeichnet,**
**dass** als Bindemittel ein synthetischer Kunststoff wie Epoxidharz oder Phenolharz verwendet wird.

32. Verfahren nach zumindest Anspruch 18,
**dadurch gekennzeichnet,**
**dass** ein flüssiges Bindemittel mit einer Glasumwandlungstemperatur T_{G} mit 50°C ≤ T_{G} ≤ 250°C verwendet wird.

33. Verfahren nach zumindest Anspruch 18,
**dadurch gekennzeichnet,**
**dass** ein flüssiges Bindemittel mit einer Viskosität V mit 10 cP ≤ V ≤ 6000 cP bei Zimmertemperatur verwendet wird.

34. Verfahren nach zumindest Anspruch 18,
**dadurch gekennzeichnet,**
**dass** rußhaltiger Elektrographit mit einem spezifischen elektrischen Widerstand W_{spez} mit 40 µΩm ≤ W_{spez} < 3500 µΩm venwendet wird.

35. Verfahren nach zumindest Anspruch 18,
**dadurch gekennzeichnet,**
**dass** ein rußhaltiger Elektrographit mit einem spezifischen elektrischen Widerstand W_{spez} mit W_{spez} ≤ 2500 µΩm verwendet wird.

36. Verfahren nach zumindest Anspruch 18,
**dadurch gekennzeichnet,**
**dass** ein rußfreier Elektrographit mit einem spezifischen elektrischen Widerstand W_{spez} mit 8µm ≤ W_{spez} ≤ 30 µΩm verwendet wird.

37. Verfahren nach zumindest Anspruch 18,
**dadurch gekennzeichnet.**
**dass** ein rußfreier Elektrographit mit einer Korngröße d₅₀ mit 20 µm ≤ d₅₀ ≤ 50 µm verwendet wird.

38. Verfahren nach zumindest Anspruch 18,
**dadurch gekennzeichnet,**
**dass** ein rußfreier feinkörniger Elektrographit mit einer Korngröße d₅₀ mit 20 µm ≤ d₅₀≤ 50 µm verwendet wird.

39. Verfahren nach zumindest Anspruch 18,
**dadurch gekennzeichnet,**
**dass** ein rußfreier und/oder rußhaltiger Elektrographit verwendet wird, dessen spezifischer elektrischer Widerstand isotrop ist.

40. Verwendung des harzgebundenen Graphitmaterials nach zumindest einem der vorherigen Ansprüche als Anschlusskontaktmaterial, insbesondere bestimmt für eine Kohlebürste und/oder einen Schleifring.

## Claims

1. Resin-bonded graphite material, in particular designated for an electrical contact, with a specific electric resistance W_{spec} ≥ 3500 µΩm,
**characterized in**
**that** the resin-bonded graphite material consists of a mixture of carbon black containing electro-graphite with a unburned carbon content of R_{G} wherein R_{G} ≥ 30 % by weight and electro-graphite free of carbon black, as well as binding agents, and that the electric specific resistance W_{spec} is 3500 µΩm ≤ W_{spec} ≤15000 µΩm.

2. Resin-bonded graphite material according at least to Claim 1,
**characterized in**
**that** the resin-bonded graphite material has a specific electric resistance W_{spec} wherein W_{spec} ≤ 10000 µΩm.

3. Resin-bonded graphite material according at least to Claim 1,
**characterized in**
**that** the mixture contains at least one solid lubricant as additive such as MoS₂ and/or WS₂ and/or an abrasive additive such as SiC and/or Al₂O₃.

4. Resin-bonded graphite material according to at least Claim 1,
**characterized in**
**that** the carbon black free electro-graphite consists of a carbon black free electro-graphite recycling material.

5. Resin-bonded graphite material according to at least Claim 1,
**characterized in**
**that** the carbon black containing electro-graphite consists of cartridge graphite.

6. Resin-bonded graphite material according to at least Claim 1,
**characterized in**
**that** the carbon black containing electro-graphite has a specific electric resistance W_{spec} wherein 3500 µΩm > W_{spec}≥ 40 µΩm.

7. Resin-bonded graphite material according to at least Claim 1,
**characterized in**
**that** the carbon black free electro-graphite has a specific electric resistance of 8 µΩm ≤ W_{spec} ≤ 30 µΩm.

8. Resin-bonded graphite material according to at least Claim 1,
**characterized in**
**that** the carbon black containing electro-graphite has a particle size d₅₀ of 20 µm ≤ d₅₀ ≤ 50 µm.

9. Resin-bonded graphite material according to at least Claim 1,
**characterized in**
**that** the carbon black free electro-graphite has a particle size d₅₀ of 20 µm ≤ d₅₀≤ 50 µm.

10. Resin-bonded graphite material according to at least Claim 1,
**characterized in**
**that** the carbon black containing and/or the carbon black free electro-graphite is isotropic in reference to the specific electric resistance.

11. Resin-bonded graphite material according to at least Claim 1,
**characterized in**
**that** the binding agent is a synthetic powder resin, such as a synthetic plastic, in particular a Duroplast.

12. Resin-bonded graphite material according to at least Claim 1,
**characterized in**
**that** the binding agent is a synthetic epoxy powder resin and/or a phenolic resin.

13. Resin-bonded graphite material according to at least Claim 1,
**characterized in**
**that** the binding agent is a powder resin dissolved in a solvent and/or a solvent-free liquid resin.

14. Resin-bonded graphite material according to at least Claim 1,
**characterized in**
**that** the carbon black containing electro-graphite and the carbon black free electro-graphite as well as its if applicable admixed solid lubricant and/or abrasive additive in total have a weight proportion of 100 as raw materials to which the binding agent with its weight proportion of 15 to 35 in reference to the 100 weight proportions of the raw materials is added.

15. Resin-bonded graphite material according to at least Claim 1,
**characterized in**
**that** the binding agent has a glass conversion temperature T_{G} wherein 50 °C ≤ T_{G} ≤ 250° C.

16. Resin-bonded graphite material according to at least Claim 1,
**characterized in**
**that** the binding agent has a viscosity V wherein 10 cP ≤ V ≤ 6000 cP at room temperature.

17. Resin-bonded graphite material according to at least Claim 1,
**characterized in**
**that** the mixture comprises 15 to 75 weight proportions of the carbon black containing electro-graphite, 15 to 75 weight proportions of the carbon black free electro-graphite, 0 to 10 weight proportions of the solid lubricant, 0 to 1 weight proportions of the abrasive additive, and 15 to 35 weight proportions of the binding agent.

18. Process for the manufacture of a resin-bonded graphite material, particularly designated for an electrical contact material,
**characterized by** the following process steps:
- Mixing of carbon black containing electro-graphite with a carbon black content R_{G} wherein R_{G} > 30 % by weight, carbon black free electro-graphite with a specific resistance value W_{spec} of 8 µΩm ≤ W_{spec} ≤ 30 µΩm and a liquid resin at a temperature T₁,
- Comminuting of the mixture to a grain size of d₅₀ wherein 50 µm ≤ d₅₀ ≤ 150 µm,
- Pressing of the comminuted mixture and
- Curing of the comminuted mixture to a mould.

19. Process according to Claim 18,
**characterized in**
**that** the carbon black containing electro-graphite, the carbon black free electro-graphite and the binding agent are mixed at the temperature T₁ wherein T₁ = room temperature.

20. Process according to at least Claim 18,
**characterized in**
**that** a solid lubricant such as MoS₂ and/or WS₂ is added to the mixture.

21. Process according to at least Claim 18,
**characterized in**
**that** an abrasive additive such as SiC and/or Al₂O₃ is added to the mixture.

22. Process according to at least Claim 18,
**characterized in**
**that** the comminuted mixture is pressed at a specific pressure of between 1000 kp/cm² and 2000 kp/cm².

23. Process according to at least Claim 18,
**characterized in**
**that** the moulding is cured over a period t to 10 h ≤ t ≤ 20 h with a final temperature T₂ wherein 180 °C ≤ T₂ ≤ 250°C.

24. Process according to at least Claim 18,
**characterized in**
**that** 15 to 75 weight proportions of the carbon black containing electro-graphite, 15 to 75 weight proportions of the carbon black free electro-graphite and 15 to 35 weight proportions of the binding agent are mixed.

25. Process according to at least Claim 18,
**characterized in**
**that** 0 to 10 weight proportions of the solid lubricant are added to the mixture.

26. Process according to at least Claim 18,
**characterized in**
**that** 0 to 1 weight proportions of the abrasive additive is added to the mixture.

27. Process according to at least Claim 18,
**characterized in**
**that** carbon black free electro-graphite recycling material is used as carbon black free electro-graphite.

28. Process according to at least Claim 18,
**characterized in**
**that** cartridge graphite is used as carbon black containing electro-graphite.

29. Process according to at least Claim 18,
**characterized in**
**that** powder resin dissolved in a solvent is used as binding agent.

30. Process according to at least Claim 18,
**characterized in**
**that** a solvent-free liquid resin is used as binding agent.

31. Process according to at least Claim 18,
**characterized in**
**that** a synthetic plastic such as epoxy resin or phenolic resin is used as binding agent.

32. Process according to at least Claim 18,
**characterized in**
**that** a liquid binding agent having a glass conversion temperature T_{G} wherein 50° C ≤ T_{G} ≤ 250 °C is used.

33. Process according to at least Claim 18,
**characterized in**
**that** a liquid binding agent having a viscosity V wherein 10 cP ≤ V ≤ 6000 cP at room temperature is used.

34. Process according to at least Claim 18,
**characterized in**
**that** a carbon black containing electro-graphite having a specific electrical resistance W_{spec} wherein 40 µΩm ≤ W_{spec} < 3500 µΩm is used.

35. Process according to at least Claim 18,
**characterized in**
**that** a carbon black containing electro-graphite having a specific electric resistance W_{spec} wherein W_{spec} ≤ 2500 µΩm is used.

36. Process according to at least Claim 18,
**characterized in**
**that** a carbon black free electro-graphite having a specific electric resistance W_{spec} wherein 8 µm ≤ W_{spec} ≤ 30 µΩm is used.

37. Process according to at least Claim 18,
**characterized in**
**that** a carbon black free electro-graphite having a particle size d₅₀ wherein 20 µm ≤ d₅₀ ≤ 150 µm is used.

38. Process according to at least Claim 18,
**characterized in**
**that** a carbon black free fine grained electro-graphite having a particle size d₅₀ wherein 20 µm ≤ d₅₀ ≤ 50 µm is used.

39. Process according to at least Claim 18,
**characterized in**
**that** a carbon black free electro-graphite and/or a carbon black containing electro-graphite is used whose specific electric resistance is isotropic.

40. Use of a resin-bonded graphite material according to at least one of the previous claims as a connection contact material that is particularly designated for a carbon brush and/or a collector ring.

## Revendications

1. Matériau graphite à liant en résine, destiné en particulier à être utilisé comme contact électrique, présentant une résistance électrique spécifique de W_{spéc} ≥ 3500 µΩm,
**caractérisé en ce**
**que** le matériau graphite à liant en résine est constitué d'un mélange d'électrographite contenant du noir de carbone avec une teneur en noir de carbone R_{G} de R_{G} ≥ 30 % pond., de l'électrographite sans noir de carbone et un liant, et que la résistance électrique spécifique W_{spéc} s'élève à 3500 µΩm ≤ W_{spéc}≤ 15000 µΩm.

2. Matériau graphite à liant en résine selon au moins la revendication 1,
**caractérisé en ce**
**que** le matériau graphite à liant en résine présente une résistance électrique spécifique W_{spéc} de W_{spéc} ≤ 10000 µΩm.

3. Matériau graphite à liant en résine selon au moins la revendication 1,
**caractérisé en ce**
**que** le mélange comprend au moins un lubrifiant solide en tant qu'agrégat tel que de la MoS₂ et/ou du WS₂ et/ou un agrégat abrasif tel que du SiC et/ou de l'Al₂O₃.

4. Matériau graphite à liant en résine selon au moins la revendication 1,
**caractérisé en ce**
**que** l'électrographite sans noir de carbone est composé d'un matériau de recyclage en électrographite sans noir de carbone.

5. Matériau graphite à liant en résine selon au moins la revendication 1,
**caractérisé en ce**
**que** l'électrographite contenant du noir de carbone est composé de graphite de cartouche.

6. Matériau graphite à liant en résine selon au moins la revendication 1,
**caractérisé en ce**
**que** l'électrographite contenant du noir de carbone présente une résistance électrique spécifique W_{spéc} de 3500 µΩm > W_{spéc} ≥ 40 µΩm.

7. Matériau graphite à liant en résine selon au moins la revendication 1,
**caractérisé en ce**
**que** l'électrographite sans noir de carbone présente une résistance électrique spécifique de 8 µΩm ≤ W_{spéc} ≤ 30 µΩm.

8. Matériau graphite à liant en résine selon au moins la revendication 1,
**caractérisé en ce**
**que** l'électrographite contenant du noir de carbone présente une grosseur de grain d₅₀ de 20 µm ≤ d₅₀ ≤ 50 µm.

9. Matériau graphite à liant en résine selon au moins la revendication 1,
**caractérisé en ce**
**que** l'électrographite sans noir de carbone présente une grosseur de grain d₅₀ de 20 µm ≤ d₅₀ ≤ 50 µm.

10. Matériau graphite à liant en résine selon au moins la revendication 1,
**caractérisé en ce**
**que** l'électrographite sans et/ou comprenant du noir de carbone est isotrope en termes de résistance électrique spécifique.

11. Matériau graphite à liant en résine selon au moins la revendication 1,
**caractérisé en ce**
**que** le liant est une résine en poudre synthétique tel que du matériau synthétique, en particulier une résine thermodurcissable.

12. Matériau graphite à liant en résine selon au moins la revendication 1,
**caractérisé en ce**
**que** le liant est une résine en poudre époxy synthétique et/ou une résine phénolique.

13. Matériau graphite à liant en résine selon au moins la revendication 1,
**caractérisé en ce**
**que** le liant est une résine en poudre dissoute dans un solvant et/ou une résine liquide sans solvant.

14. Matériau graphite à liant en résine selon au moins la revendication 1,
**caractérisé en ce**
**que** l'électrographite comprenant du noir de carbone et l'électrographite sans noir de carbone ainsi que le lubrifiant solide et/ou l'additif abrasif éventuellement ajoutés à l'électrographite en tant que matières premières présentent au total une part pondérale de 100 auxquels est ajouté le liant d'une part pondérale de 15 à 35 pour les 100 parts pondérales des matières premières.

15. Matériau graphite à liant en résine selon au moins la revendication 1,
**caractérisé en ce**
**que** le liant présente une température de vitrification T_{G} de 50°C ≤ T_{G} ≤ 250°C.

16. Matériau graphite à liant en résine selon au moins la revendication 1,
**caractérisé en ce**
**que** le liant présente une viscosité V de 10 cP ≤ V ≤ 6000 cP à température ambiante.

17. Matériau graphite à liant en résine selon au moins la revendication 1,
**caractérisé en ce**
**que** le mélange comprend 15 à 75 parts pondérales de l'électrographite comprenant du noir de carbone, 15 à 75 parts pondérales de l'électrographite sans noir de carbone, 0 à 10 parts pondérales du lubrifiant solide, 0 à 1 part pondérale de l'additif abrasif ainsi que 15- 35 parts pondérales du liant.

18. Procédé de fabrication d'un matériau graphite à liant en résine, destiné en particulier à être utilisé comme contact électrique,
**caractérisé par** les étapes suivantes :
- mélange d'électrographite comprenant du noir de carbone à une teneur R_{G} de R_{G} > 30 % pond., d'électrographite sans noir de carbone avec une résistance électrique spécifique W_{spéc} de 8 µΩm ≤ W_{spéc} ≤ 30 µΩm et de résine liquide à une température T₁,
- mouture du mélange à une grosseur de grain d₅₀ de 50 µm ≤ d₅₀ ≤ 150 µm,
- pressage du mélange moulu et
- durcissement du mélange moulu en un corps moulé.

19. Procédé selon la revendication 18,
**caractérisé en ce**
**que** l'électrographite comprenant du noir de carbone, l'électrographite sans noir de carbone et le liant sont mélangés à une température T₁ de T₁ = température ambiante.

20. Procédé selon au moins la revendication 18,
**caractérisé en ce**
**qu'**un lubrifiant solide tel que de la MoS₂ et/ou du WS₂ est ajouté au mélange.

21. Procédé selon au moins la revendication 18,
**caractérisé en ce**
**qu'**un additif abrasif tel que du SiC et/ou de l'Al₂O₃ est ajouté au mélange.

22. Procédé selon au moins la revendication 18,
**caractérisé en ce**
**que** le mélange moulu est pressé à une puissance de pression spécifique comprise entre 1000 kP/cm² et 2000 kP/cm².

23. Procédé selon au moins la revendication 18,
**caractérisé en ce**
**que** la pièce moulée est durcie pendant une période t allant jusqu'à 10 h ≤ t ≤ 20 h à une température finale T₂ de 180°C ≤ T₂ ≤ 250°C.

24. Procédé selon au moins la revendication 18,
**caractérisé en ce**
**que** 15 à 75 parts pondérales de l'électrographite comprenant du noir de carbone, 15 à 75 parts pondérales de l'électrographite sans noir de carbone et 15 à 35 parts pondérales du liant sont mélangés.

25. Procédé selon au moins la revendication 18,
**caractérisé en ce**
**que** 0 à 10 parts pondérales du lubrifiant solide sont ajoutées au mélange.

26. Procédé selon au moins la revendication 18,
**caractérisé en ce**
**que** 0 à 1 part pondérale de l'additif abrasif est ajoutée au mélange.

27. Procédé selon au moins la revendication 18,
**caractérisé en ce**
**que** du matériau de recyclage en électrographite sans noir de carbone est utilisé en tant qu'électrographite sans noir de carbone.

28. Procédé selon au moins la revendication 18,
**caractérisé en ce**
**que** du graphite de cartouche est utilisé en tant qu'électrographite comprenant du noir de carbone.

29. Procédé selon au moins la revendication 18,
**caractérisé en ce**
**qu'**une résine en poudre dissoute dans un solvant est utilisée en tant que liant.

30. Procédé selon au moins la revendication 18,
**caractérisé en ce**
**que** de la résine liquide sans solvant est utilisée en tant que liant.

31. Procédé selon au moins la revendication 18,
**caractérisé en ce**
**qu'**un matériau synthétique tel que de la résine époxy ou de la résine phénolique est utilisé en tant que liant.

32. Procédé selon au moins la revendication 18,
**caractérisé en ce**
**qu'**un liant liquide avec une température de vitrification T_{G} de 50°C ≤ T_{G} ≤ 250°C est utilisé.

33. Procédé selon au moins la revendication 18,
**caractérisé en ce**
**qu'**un liant liquide d'une viscosité V de 10 cP < V ≤ 6000 cP à température ambiante est utilisé.

34. Procédé selon au moins la revendication 18,
**caractérisé en ce**
**que** de l'électrographite contenant du noir de carbone avec une résistance électrique spécifique W_{spéc} de 40 µΩm ≤ W_{spéc} ≤ 3500 µΩm est utilisé.

35. Procédé selon au moins la revendication 18,
**caractérisé en ce**
**qu'**un électrographite contenant du noir de carbone avec une résistance électrique spécifique W_{spéc} de W_{spéc} ≤ 2500, µΩm est utilisé.

36. Procédé selon au moins la revendication 18,
**caractérisé en ce**
**qu'**un électrographite sans noir de carbone avec une résistance électrique spécifique W_{spéc} de 8 µm ≤ W_{spéc}≤ 30 µΩm est utilisé.

37. Procédé selon au moins la revendication 18,
**caractérisé en ce**
**qu'**un électrographite sans noir de carbone avec une grosseur de grain d₅₀ de 20 µm ≤ d₅₀ ≤ 50 µm est utilisé.

38. Procédé selon au moins la revendication 18,
**caractérisé en ce**
**qu'**un électrographite à grain fin et sans noir de carbone avec une grosseur de grain d₅₀ de 20 µm ≤ d₅₀ ≤ 50 µm est utilisé.

39. Procédé selon au moins la revendication 18,
**caractérisé en ce**
**qu'**est utilisé un électrographite sans noir de carbone et/ou un électrographite contenant du noir de carbone dont la résistance électrique spécifique est isotrope.

40. Utilisation du matériau graphite à liant en résine selon au moins une des revendications précédentes en tant que matériau pour contact de connexion, en particulier destiné à un balai de charbon et/ou une bague collectrice.
